(19) Europäisches Patentamt
European Patent Office
Office européen des brevets

(11) Publication number: **0 148 582**
**A1**

(12) # EUROPEAN PATENT APPLICATION

(21) Application number: **84308162.1**

(22) Date of filing: **26.11.84**

(51) Int. Cl.⁴: **A 01 N 43/70,** A 01 N 43/707
//
(A01N43/70, 43:40),
(A01N43/707, 43:40)

(30) Priority: **28.11.83 CA 442043**

(43) Date of publication of application: **17.07.85**
**Bulletin 85/29**

(84) Designated Contracting States: **BE CH DE FR GB IT LI LU NL SE**

(71) Applicant: **ELI LILLY AND COMPANY, 307, East McCarty Street, Indianapolis Indiana 46285 (US)**

(72) Inventor: **Schaafsma, Arthur William, 609 Patricia Avenue, Winnipeg Manitoba, R3T 3A7 (CA)**
Inventor: **Oliver, John Paul, 1424 Oxford Street, Oshawa Ontario L1J 3W8 (CA)**
Inventor: **Anderson, John Robert, 20 Woodlawn Avenue, Winnipeg Manitoba R3M 2P2 (CA)**

(74) Representative: **Tapping, Kenneth George et al, Lilly Industries Limited Patent Department Erl Wood Manor, Windlesham Surrey, GU20 6PH (GB)**

(54) **Herbicidal combinations.**

(57) A herbicidal formulation comprising as active ingredients a triazine herbicide and a picolinic acid of formula:

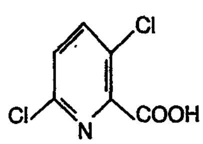

associated with one or more agronomically acceptable carriers therefor.

EP 0 148 582 A1

ACTORUM AG

# HERBICIDAL COMBINATIONS

The present invention relates to a method of controlling weeds with novel combinations of certain heterocyclic derivatives and also provides herbicidal formulations containing said novel combinations.

According to one aspect of the present invention there is provided a herbicidal formulation comprising as active ingredients a triazine herbicide and a picolinic acid of formula:

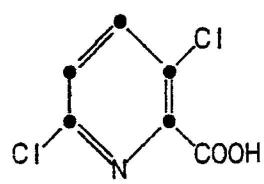

associated with one or more agronomically-acceptable carriers therefor.

In a second aspect of the present invention there is provided a method of controlling weeds by applying a combination of said picolinic acid and said triazine to a locus infested by said weeds.

The preferred triazine for use in the invention is cyanazine, although other important members of the triazine class of herbicides which may be mentioned are atrazine and metribuzin.

The preparation and properties of the triazine class of herbicides has been extensively documented in the literature. For example, cyanazine, the common name for 2-chloro-4-(1-cyano-1-methylethylamino)-6-ethylamino-1,3,5-triazine:

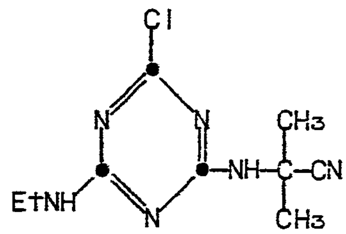

is described in U.K. Patent Specification No. 1,132,306; atrazine, the common name for 2-chloro-4-ethylamino-6-isopropylamino-1,3,5-triazine:

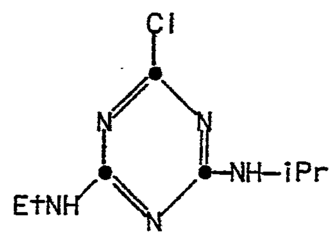

is described in U.S. Patent Specification No. 2,891,855, and metribuzin, the common name for 4-amino-6-t-butyl-4,5-dihydro-3-methylthio-1,2,4-triazin-5-one:

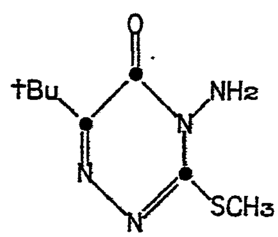

is described by U.S. Patent Specification No. 3,905,801. Similarly, the other active component of the invention, i.e. 3,6-dichloropicolinic acid (or 3,6-dichloro-2-pyridinecarboxylic acid in Chemical Abstracts usage) is described in U.S. Patent Specification No. 3,317,549.

It has been found, in accordance with the invention, that 3,6-dichloropicolinic acid potentiates the activity of triazine herbicides against a number of important weed species including redroot pigweed (Amaranthus retroflexus), smartweed (Polygonum sp.) wild mustard (Brassica kaber) foxtail (Setaria viridis), lambsquarter (Chenopodium album) and wild buckwheat (Polygonum convolvulus). In other words, the combinations of the invention exhibit synergism in the treatment of these weeds.

The combinations of the invention are particularly useful for the control of weeds in areas of crop growth such as in areas where triazine tolerant rape (Canola) is growing.

It is preferred to control weeds in accordance with the invention by post-emergent spraying of the novel combinations onto the area needing treatment. The actual material sprayed onto the locus of the weeds will normally be derived from a "tank-mix", ie. a very dilute aqueous solution of the two active ingredients.

The amount of triazine applied to the area to be treated will normally lie within the range 0.05 to 4 kg/ha. For atrazine and cyanazine the normal ranges are from 0.1 to 4, preferably 0.5 to 3 kg/ha, whereas for metribuzin the rates are somewhat lower, 0.05 to 2 kg/ha with application rates in the range from 0.1 to 0.5 kg/ha being preferred. The amount of picolinic acid to be applied to the weeds will normally be in the range from 0.05 to 2 kg/ha, preferably from 0.1 to 1 kg/ha.

In general, herbicidal formulations in accordance with the invention will be of two types, ie. concentrated formulations intended to be diluted or dispersed before application, and end-use formulations, such as tank-mixes, in a form ready for immediate application to the area needing treatment.

The ratio of active components in the formulations of the invention will be such as to provide the desired ratio of application rates. Typically, the ratio of triazine to picolinic acid will lie in the range of from 40:1 to 1:40, preferably from 10:1 to 1:10, most preferably about 5:1 by weight.

Concentrated formulations are usually designed to be suspended or emulsified in water prior to application. Such formulations are usually in the form of wettable powders, emulsifiable concentrates or aqueous suspensions.

Wettable powders comprise an intimate mixture of the herbicidally active compounds in an inert carrier which is a mixture of a fine inert powder and one or more surfactants. The concentration of the active ingredients will typically vary from 10 to 90% by weight. The inert powder is usually chosen from the attapulgite clays, the montomorillonite clays, the diatomaceous earths, or the purified silicates, and comprises up to 89.5% of the formulation. Effective surfactants, which comprise from 0.5% to 10% of the wettable powder composition, are chosen from among the sulfonated lignins, the condensed naphthalenesulfonates, the naphthalenesulfonates, the alkylbenzenesulfonates, the alkyl sulfates, and non-ionic surfactants such as ethyleneoxide adducts of nonyl phenol.

Emulsifiable concentrate compositions of this invention comprise a convenient concentration of the compound, such as from 5% to 50% in total of the two compounds, dissolved in an inert carrier which is a mixture of water-immiscible organic solvent and emulsifiers. Useful organic solvents include the aromatics, especially the xylenes, and the petroleum fractions, especially the high-boiling naphthalenic and olefinic portions of petroleum such as heavy aromatic naphtha. Other organic solvents are frequently used also, such as the terpenic solvents including derivatives of rosin and orange rind, and complex alcohols such as 2-ethoxyethanol. Suitable emulsifiers for emulsifiable concentrates are chosen from the same types and concentrations of surfactants used for wettable powders.

Examples of typical herbicidal formulations which may be used in accordance with the invention are listed below:

Example 1

| 5% Granule | Percent (by wt.) |
|---|---|
| 3,6-Dichloropicolinic Acid | 2.5 |
| Cyanazine | 2.5 |
| Attapulgite 30/60 Clay | 95.0 |

## Example 2

| 5% Granule | Percent (by wt.) |
|---|---|
| 3,6-Dichloropicolinic Acid | 2.5 |
| Cyanazine | 2.5 |
| Mineral Seal Oil | 1-3 |
| Limestone 30/60 | 94-92 |

## Example 3

| 75% Wettable Powder | Percent (by wt.) |
|---|---|
| 3,6-Dichloropicolinic Acid | 37.5 |
| Cyanazine | 37.5 |
| Sodium Lauryl Sulfate | 5.0 |
| Zeolex 7 | 5.0 |
| Polyfon O | 5.0 |
| Barden Clay | 10.0 |

## Example 4

| 4AS (4 lb/gal Aqueous Suspension) | Percent (by wt.) |
|---|---|
| 3,6-Dichloropicolinic Acid | 24.0 |
| Cyanazine | 24.0 |
| Pluronic 103 | 5.0 |
| Xanthan Gum | 0.5 |
| Formalin | 0.05 |
| Antifoam C | 0.05 |
| Water | QS |

The efficacy of the combinations of the invention was evaluated in a field test carried out in Manitoba, Canada. Rape (T-T *Canola*) of the summer variety was planted (direct seeded) in a clay loam soil in early June. Twenty days after seeding, a combination of cyanazine and 3,6-dichloro-2-pyridine carboxylic acid (derived from a conventional tank mix) was sprayed onto the crop and associated weeds. Sixty days thereafter the degree of weed control was evaluated. Results of the test are shown in the following Table.

TABLE

PERCENT WEED CONTROL

| Treatment (Active) | Rate kg/ha | Redroot Pigweed E | Redroot Pigweed L | Smartweed E | Wild Mustard E | Foxtail E | Foxtail L | Lambsquarters L | Wild Buckwheat L |
|---|---|---|---|---|---|---|---|---|---|
| Lontrel 360 | 0.2 | 30 | 7 | 50 | 50 | 27 | 7 | 7 | 7 |
| Bladex | 1.0 | 90 | 78 | 93 | 85 | 71 | 32 | 78 | 78 |
| Lontrel 360 + Bladex | 0.2 + 1.0 | 92 | 93 | 95 | 82 | 70 | 63 | 93 | 93 |
| Control | 0 | 0 | 0 | 0 | 0 | 0 | 0 | 0 | 0 |

E = Early

L = Late

"Lontrel 360" is a trade name for 3,6-dichloropicolinic acid

"Bladex" is a trade name for cyanazine

CLAIMS

1. A herbicidal formulation comprising as active ingredients a triazine herbicide and a picolinic acid of formula:

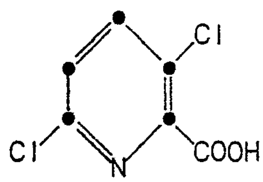

associated with one or more agronomically acceptable carriers therefor.

2. A herbicidal formulation as claimed in claim 1 wherein the triazine is cyanazine.

3. A method of controlling weeds by applying a triazine herbicide and a picolinic acid of formula:

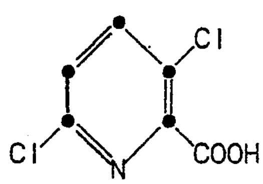

to a locus infested by said weeds.

4. A method according to claim 3, wherein the triazine is cyanazine.

European Patent Office

# EUROPEAN SEARCH REPORT

0148582

Application number

EP 84 30 8162

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 89, no. 13, September 25, 1978, page 240, abstract no. 101664n, COLUMBUS, OHIO, (US). G. GUMMESSON: "Weed control in oilseeds". & Swed. Weed Conf. (Proc.) 1978, 19(Weeds Weed Control), H1-H4. * Abstract, line 11: cyanazine-3,6-dichloropicolinic acid mixt. * ----- | 1-4 | A 01 N 43/70<br>A 01 N 43/707<br>//(A 01 N 43/70<br>A 01 N 43/40)<br>(A 01 N 43/707<br>A 01 N 43/40) |
| | | | **TECHNICAL FIELDS SEARCHED (Int. Cl.4)** |
| | | | A 01 N |

The present search report has been drawn up for all claims

| Place of search | Date of completion of the search | Examiner |
|---|---|---|
| THE HAGUE | 11-03-1985 | DECORTE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82